# EUROPÄISCHE PATENTSCHRIFT

(11) **EP 0 819 548 B1**
(45) Veröffentlichungstag und Bekanntmachung des Hinweises auf die Patenterteilung: **07.11.2001**
(21) Anmeldenummer: 97111398.0
(22) Anmeldetag: 05.07.1997
(51) Int. Cl.: B41M 5/40, B41M 5/38

(54) **Farbempfangselement für thermische Farbstoffübertragung**
Ink-receiving sheet for thermal dye transfer
Matériau d'enregistrement pour l'impression par transfert thermique

(30) Priorität: 17.07.1996 DE 19628800
(43) Veröffentlichungstag der Anmeldung: 21.01.1998
(73) Patentinhaber: Felix Schoeller jr Foto- und Spezialpapiere GmbH & Co. KG, 49086 Osnabrück (DE)
(72) Erfinder: Gumbiowski, Rainer, Dr., 49134 Wallenhorst (DE); Graumann, Jürgen, 49090 Osnabrück (DE); Becker, Dieter, Dr., 49125 Georgsmarienhütte (DE)
(74) Vertreter: Cohausz & Florack

(56) Entgegenhaltungen:
- EP-A- 0 409 555
- DE-A- 4 302 210
- US-A- 4 999 335
- US-A- 5 350 733
- US-A- 5 387 574
- US-A- 5 451 561
- SCOTT W E: "Properties of paper: an introduction." 1989 , TAPPI PRESS , ATLANTA, US XP002044210 * Seite 42, linke Spalte, Zeile 32 - Zeile 39 *

## Beschreibung

Die Erfindung betrifft ein Farbempfangselement für thermische Farbstoffübertragung, das einen Träger, eine zusammengesetzte Folie und Farbempfangsschicht enthält.

Das in den letzten Jahren entwickelte Verfahren der thermischen Farbstoffübertragung ermöglicht die Wiedergabe eines elektronisch erzeugten Bilds in Form einer "Hardcopy". Das Prinzip eines solchen Verfahrens ist wie folgt:

Ein digitales Bild wird hinsichtlich der Grundfarben Cyan, Magenta, Gelb und Schwarz aufbereitet und in entsprechende elektrische Signale umgewandelt, die dann in Wärme mittels eines Thermokopfs umgesetzt werden. Durch die Wärmeeinwirkung sublimiert der Farbstoff aus der Donorschicht eines im Kontakt mit dem Empfangsmaterial stehenden Farbbands (Farbblatts) und diffundiert in die Empfangsschicht hinein.

Ziel dieser Technologie ist die Anpassung der Bildqualität der Farbausdrucke an das Niveau der Silbersalzfotografie.

Um Bilder hoher Qualität hinsichtlich optischer Dichte, Farbtons und Auflösung zu erreichen, muß neben glatter Oberfläche, Hitzestabilität, Lichtstabilität, guter Farbstofflöslichkeit und "anti-blocking"-Eigenschaften, eine weitere Anforderung an das Empfangselement, nämlich eine sogenannte Weichheit erfüllt werden. Diese Eigenschaft ist notwendig, um einen guten Kontakt zwischen dem Thermokopf des Druckers und dem Empfangsmaterial herzustellen. Ist dies nicht gewährleistet, können unbedruckte Stellen auf der Bildoberfläche oder Dichteschwankungen beobachtet werden.

Ein weiteres Problem stellt das Curlverhalten des Empfangsmaterials dar. Oft neigen die Empfangsmaterialien nach einem Durchgang durch den Thermodrucker zu einer starken Wölbung, die auch im weiteren Zeitverlauf erhalten bleibt.

Das Problem der Weichheit kann beispielsweise durch das Aufbringen einer die Funktion einer Polsterschicht erfüllenden Zwischenschicht gelöst werden. Aus der JP 02-274 592 ist bekannt, eine Zwischenschicht aus geschäumtem Polypropylen zwischen Trägermaterial und Empfangsschicht aufzutragen.

Dasselbe Problem soll in der JP 03-268 998 durch das Auftragen geschäumter Polyolefinschichten auf beiden Seiten des Trägers gelöst werden.

Aus der EP 0 551 894 ist bekannt, auf ein Substrat eine zusammengesetzte Folie aufzutragen, die eine poröse Kernschicht und mindestens eine porenfreie Oberflächenschicht enthält.

Aufgabe der vorliegenden Erfindung ist ein Farbempfangselement für thermische Farbstoffübertragung vorzuschlagen, das einen geringen Curl, hohe Farbdichte und eine gleichmäßige Bilderscheinung aufweist.

Die Aufgabe wird durch ein Farbempfangselement gelöst, das einen Träger, eine zusammengesetzte Folie und eine Bildempfangsschicht enthält, wobei die zusammengesetzte Folie eine biaxial gestreckte, coextrudierte Folie ist, die eine Mikroporen aufweisende thermoplastische Kernschicht und auf der der Empfangsschicht zugewandten Seite mindestens zwei porenfreie thermoplastische Oberflächenschichten enthält und der Träger ein Papier mit einer Dichte von ≤ 0,8 g/cm³ ist.

Überraschenderweise hat sich herausgestellt, daß zwei porenfreie Schichten die Unebenheiten der Mikroporen aufweisenden Kernschicht sehr viel besser ausgleichen als eine einzige Schicht gleicher Dicke. Dadurch wird ein besseres Bild mit weniger "Mottle erzielt. Eine einzige Schicht höherer Dicke, die die Unebenheiten der Mikroporen aufweisenden Schicht in gleicher Weise ausgleicht, würde die Kompressibilität des Element beeinträchtigen.

Durch diesen Zweischichtaufbau mit zwei dünnen Schichten auf der Kernschicht wird weder das Wärmeisolationsverhalten der Mikroporen aufweisenden Kernschicht noch die Kompressibiltät des Elements, die für den guten Kontakt mit dem Thermokopf verantwortlich ist, beeinträchtigt.

In einer besonderen Ausgestaltung der Erfindung weist die zusammengesetzte Folie zusätzlich auf der dem Träger zugewandten Seite der Kernschicht mindestens eine porenfreie thermoplastische Oberflächenschicht auf.

Die Gesamtdicke der Folie kann bis 40 *µ*m betragen, insbesondere jedoch 25 bis 35 *µ*m. Die poröse Kernschicht macht 85 bis 93 % der gesamten Dicke der zusammengesetzten Folie aus.

In einer besonderen Ausgestaltung der Erfindung ist die Mikroporen aufweisende Kernschicht eine Polyolefinschicht, insbesondere eine Polypropylenschicht. Von den mindestens zwei porenfreien thermoplastischen Oberflächenschichten, die auf der der Empfangsschicht zugewandten Seite der Kernschicht angeordnet sind, besteht die äußere Schicht vorzugsweise ganz oder teilweise aus einem Polypropylen-Copolymer.

Hierzu geeignet ist insbesondere ein Polyethylen/ Polypropylen-Copolymer. Die von den mindestens zwei porenfreien Schichten mit der Kernschicht direkt kontaktierende Oberflächenschicht ist eine vorzugsweise aus Polypropylen-Homopolymer ganz oder teilweise bestehende Schicht.

Sowohl die Kernschicht als auch die Oberflächenschicht können aus anderen thermoplastischen Polymeren wie Polyestern und anderen Polyolefinen wie Polyethylenen, Ethylen/α-Olefinpolymer sowie deren Mischungen hergestellt werden.

Der erfindungsgemäße Träger ist ein Träger mit geringer Dichte. Als besonders gut geeignet erwies sich ein unbeschichtetes oder harzbeschichtetes, insbesondere polyolefinbeschichtetes Rohpapier mit einer Dichte von ≤ 0,8g/cm³. Das Papier enthält eine Mischung von Nadelholzsulfat- und/oder -sulfit-Zellstoff und Laubholz-Zellstoff. In einer besonderen Ausgestaltung der Erfindung enthält die Mischung einen Nadelholzsulfat- und Eukalyptus-Zellstoff. In einer bevorzugten Form handelt es sich bei dem Nadelholzsulfat-Zellstoff um Kiefernsulfat-Zellstoff. Der Anteil des Nadelholzsulfat-Zellstoffs im Gesamtzellstoff beträgt 5 bis 80 Gew.%, insbesondere 10 bis 40 Gew.%. Als Leimungs- und Naßfestmittel können alle in der Papierindustrie üblichen Produkte eingesetzt werden. Zur Erhöhung der Weiße und der Opazität des Papiers können anorganische Pigmente wie Calciumcarbonat, Clay, Titandioxid und Silikate zugegeben werden. Aber auch andere Hilfsstoffe können eingesetzt werden.

Eine besonders hohe Dimensionsstabilität weist ein Papier auf, bei dem die Ausrichtung der Fasern in Längs- und Querrichtung so ausgewählt wurde, daß sich bei der Reißlänge und der Biegesteifigkeit ein Verhältnis längs/quer von ≤ 2 ergibt.

In einer besonderen Ausgestaltung der Erfindung weist das Papier eine Feuchtdehnung quer nach Fenchel von ≤ 3 %, insbesondere von ≤ 2 % auf. Das Flächengewicht des Papiers kann 60 bis 250 g/m² betragen. Bevorzugt wird jedoch ein Papier mit einem Flächengewicht von 80 bis 160 g/m².

In einer besonderen Ausgestaltung der Erfindung weist die Rückseite des Trägers eine Polyolefinschicht mit einem Auftragsgewicht bis 50 g/m², insbesondere jedoch von 20 bis 35 g/m² auf.

In einer weiteren Ausgestaltung der Erfindung ist zwischen dem Träger und der zusammengesetzten Folie eine polymere Haftschicht angeordnet. Die für die Haftschicht geeigneten Polymere sind beispielsweise Ethylen/Vinylacetat-Copolymer, Polyacrylate, Acrylat-Copolymere, Polyolefine, Ionomerharze oder Polyurethane.

Besonders gut geeignet sind hierfür die Polyurethane, wobei sie entweder als Zweikomponenten-System mit organischen Lösungsmitteln oder als ein selbstvernetzendes Einkomponenten-System aufgetragen werden. Das Auftragsgewicht der Haftschicht beträgt maximal 6 g/m².

In einer weiteren Ausgestaltung der Erfindung kann das erfindungsgemäße Farbempfangselement eine Schicht zwischen der zusammengesetzten Folie und der Empfangsschicht enthalten. Diese Schicht verbessert die Verankerung der Empfangsschicht mit der zusammengsetzten Folie. Hierfür geeignet sind alle haftverbessernden Polymere wie Ethylen/Vinylacetat-Copolymer, Polyacrylate, Acrylat-Copolymere, Ionomerharze oder Polyurethane, von denen sich die letzteren als besonders gut geeignet erwiesen. Das Auftragsgewicht beträgt maximal 6g/m², insbesondere 1 bis 4g/m².

Diese haftvermittelnde Schicht zwischen der Empfangsschicht und der zusammengesetzten Folie kann auch entsprechend eingefärbt werden, wodurch sich das gesamte Empfangselement insbesondere gut für Proof-Verfahren (z.B. für das Analog Chromalin- oder digitale Proofverfahren) eignet.

Zur Einfärbung der Haftschicht können Farbstoffe wie Napronyl^{R} Black EGX, Flexonyl^{R} Yellow NCG-LA und Flexonyl^{R} Red FGR-LA in einer Menge von 0,01 bis 1 Gew.%, bezogen auf das Gewicht der haftvermittelnden Schicht, eingesetzt werden.

Erfindungsgemäß kann jede beliebige Empfangsschicht eingesetzt werden. Die Hauptkomponente der Empfangsschicht ist in der Regel ein thermoplastisches Harz, das eine Affinität zum Farbstoff aus dem Farbband aufweist. Hierfür können beispielsweise Kunststoffe mit Esterbindungen (Polyester-, Polyacrylsäureester-, Polycarbonat-, Polyvinylacetat- oder Styrolacrylatharze), Kunststoffe mit Amidbindungen sowie Mischungen der aufgeführten Kunststoffe verwendet werden. Es können aber auch Copolymere eingesetzt werden, die als Hauptbestandteil mindestens eine der oben genannten Strukturen aufweisen wie Vinylchlorid/Vinylacetat-Copolymer.

Gemäß einer weiteren Ausgestaltung enthält der erfindungsgemäße Träger ein mit Polyethylen und/oder Polypropylen beschichtetes Rohpapier. Bevorzugt wird ein Papier, dessen Polyolefinschicht eine Dicke von ≤ 15 µm aufweist, insbesondere jedoch 8 bis 15 µm. Die Polyolefinschicht kann auf das Rohpapier aufextrudiert oder aufkaschiert werden.

Das Rohpapier enthält eine Mischung von Nadelholzsulfat- und/oder -sulfitzellstoff und Laubholz-Zellstoff. In einer besonderen Ausgestaltung der Erfindung handelt es sich bei dem Nadelholzsulfat-Zellstoff um Kiefernsulfat-Zellstoff. Der Anteil des Nadelholzsulfat-Zellstoffs im Gesamtzellstoff beträgt 5 bis 80 Gew.%, vorzugsweise 10 bis 40 Gew.%. Als Leimungs- und Naßfestmittel können alle in der Papierindustrie üblichen Produkte eingesetzt werden. Außerdem können anorganische Pigmente wie Calciumcarbonat, Clay, Titandioxid oder Silikate und andere Hilfsmittel eingesetzt werden.

Besonders gut geeignet ist ein Papier, bei dem die Ausrichtung der Fasern in Längs- und Querrichtung so ausgewählt wurde, daß sich bei der Reißlänge und der Biegesteifigkeit ein Verhältnis längs/quer von ≤ 2 ergibt.

Die Erfindung soll nachfolgend durch Beispiele näher erläutert werden.

### Beispiele

### Beispiel 1

Auf ein Basispapier mit einem Flächengewicht von 120 g/m² und einer Dichte von 0,65 g/cm³, hergestellt aus einer Kiefern- und Eukalyptusholz in einem Verhältnis 1:5 enthaltenden Zellstoffsuspension wurden folgende Schichten aufgebracht:
a) Haftschicht aus einer Polyurethan-Lösung (Auftragsgewicht: 4g/m²)
b) Zusammengesetzte Folie Trespaphan® SHD 28 der Hoechst AG (28 mm Dicke, Flächengewicht=21,5 g/m²) bestehend aus:
   einer mikroporösen Polypropylen-Kernschicht,
   zwei porenfreien Oberflächenschichten auf der einen Seite der Kernschicht, von denen die der Kernschicht zugewandte Schicht eine porenfreie Polypropylen-Schicht ist und die äußere Oberflächenschicht eine porenfreie Polyethylen/Polypropylen-Schicht ist,
   einer porenfreien Polypropylen-Oberflächenschicht auf der anderen Seite der Kernschicht.
c) Empfangschicht aus einer Mischung von Vinylchlorid/Vinylacetat-Copolymer und Vinylchlorid/Acrylsäuremethylester-Copolymer 1:1 (Auftragsgewicht: 6g/m²)
d) Polyethylen-Schicht auf der Rückseite des Trägers, bestehend aus 60 Gew.% LDPE und 40 Gew.% HDPE (Auftragsgewicht: 30 g/m²)

### Beispiel 2

Ein gemäß Beispiel 1 hergestelltes Farbempfangselement wurde zusätzlich mit einer Haftschicht zwischen der Farbempfangsschicht und der zusammengesetzten Folie versehen. Die Haftschicht wurde aus einer Polyurethan-Dispersion mit einem Auftragsgewicht von 2 g/m² aufgetragen.

### Beispiel 3

Ein Bildempfangselement wurde wie im Beispiel 1 hergestellt, nur daß die dort verwendete zusammengesetzte Folie gegen eine andere Folie ausgetauscht wurde. Die hier verwendete Folie (35 *µ*m) setzte sich aus folgenden Bestandteilen zusammen:
mikroporöse Polypropylen-Kernschicht
zwei porenfreie Oberflächenschichten auf jeder Seite der Kernschicht, wobei die der Kernschicht zugewandten Oberflächenschichten porenfreie Polypropylen-Schichten und die äußeren Oberflächenschichten porenfreie Ethylen/Propylen-Copolymer-Schichten sind.

Das Flächengewicht der zusammengesetzten Folie beträgt 20,5 g/m².

## Patentansprüche

1. Farbempfangselement für thermische Farbstoffübertragung mit einem Träger, einer zusammengesetzten, biaxial gestreckten, coextrudierten Folie mit einer Mikroporen aufweisenden thermoplastischen Kernschicht und einer Farbempfangsschicht, **dadurch gekennzeichnet, daß** die zusammengesetzte Folie auf der der Empfangsschicht zugewandten Seite mindestens zwei porenfreie thermoplastische Oberflächenschichten enthält und der Träger ein Papier mit einer Dichte von ≤ 0,8 g/cm³ ist.

2. Farbempfangsschicht nach Anspruch 1, **dadurch gekennzeichnet, daß** die zusammengesetzte Folie zusätzlich auf der dem Träger zugewandten Seite der Kernschicht mindestens eine porenfreie thermoplastische Oberflächenschicht aufweist.

3. Farbempfangselement nach Anspruch 1 und 2, **dadurch gekennzeichnet, daß** die Dicke der zusammengesetzten Folie bis 40 µm beträgt.

4. Farbempfangselement nach Anspruch 3, **dadurch gekennzeichnet, daß** die Dicke der zusammengesetzten Folie 25 bis 35 µm beträgt.

5. Farbempfangselement nach Anspruch 1 bis 4, **dadurch gekennzeichnet, daß** die äußere der Oberflächenschichten auf der der Empfangsschicht zugewandten Seite der Kernschicht eine ein Polypropylen-Copolymer enthaltende Schicht ist.

6. Farbempfangselement nach Anspruch 1 bis 5, **dadurch gekennzeichnet, daß** die Mikroporen aufweisende Kernschicht eine Polyolefinschicht, insbesondere eine Polypropylenschicht ist.

7. Farbempfangsschicht nach Anspruch 1 bis 6, **dadurch gekennzeichnet, daß** die mit der Kernschicht direkt kontaktierende porenfreie Oberflächenschicht der mindestens zwei porenfreien Schichten eine ein Polypropylen-Homopolymer enthaltende Schicht ist.

8. Farbempfangsschicht nach Anspruch 1 bis 7, **dadurch gekennzeichnet, daß** der Träger ein eine Feuchtdehnung quer nach Fenchel von ≤ 3% aufweisendes Papier ist.

9. Farbempfangselement nach Anspruch 1 bis 8, **dadurch gekennzeichnet, daß** der Träger eine Dicke von 80 bis 250 µm aufweist.

10. Farbempfangselement nach Anspruch 1 bis 9, **dadurch gekennzeichnet, daß** auf der Rückseite des Trägers eine Polyolefinschicht mit einem Auftragsgewicht bis 50 g/m², insbesondere von 20 bis 35 g/m², angeordnet ist.

11. Farbempfangselement nach Anspruch 1 bis 10, **dadurch gekennzeichnet, daß** zwischen dem Träger und der zusammengesetzten Folie eine Haftschicht angeordnet ist.

12. Farbempfangselement nach Anspruch 1 bis 11, **dadurch gekennzeichnet, daß** zwischen der zusammengesetzten Folie und der Empfangsschicht eine Haftschicht angeordnet ist.

13. Farbempfangselement nach Anspruch 1, **dadurch gekennzeichnet, daß** der Papierträger mit Polyolefin beschichtet ist und das Rohpapier eine Dichte von ≤ 0,8 g/cm³ aufweist.

14. Farbempfangselement nach Anspruch 13, **dadurch gekennzeichnet, daß** die Dicke der Polyolefinschicht ≤ 15 µm beträgt.

15. Farbempfangselement nach einem der Ansprüche 1 bis 15, **dadurch gekennzeichnet, daß** das Papier eine Mischung von Nadelholzsulfat- und Laubholz-Zellstoff enthält, wobei der Anteil des Nadelholzsulfat-Zellstoffs im Gesamtzellstoff 5 bis 80 Gew.%, insbesondere 10 bis 40 Gew.%, beträgt.

## Claims

1. Dye-receiving element for thermal dye transfer with a substrate, a composite, biaxially stretched, coextruted foil with a micropores containing thermoplastic core layer, and a dye-receiving layer, **characterized in that** the composite foil contains at least two thermoplastic surface layers on the side phasing the receiving layer and the carrier is a paper with a density of < 0.8 g/cm³.

2. Dye-receiving element according to claim 1, **characterized in that** the composite foil additionally exhibits at least one pore-free thermoplastic surface layer on the side of the carrier facing the core layer.

3. Dye-receiving element according to claims 1 and 2, **characterized in that** the thickness of the composite foil is at least 40 µm.

4. Dye-receiving element according to claim 3, **characterized in that** the thickness of the composite foil is from 25 to 35 µm.

5. Dye-receiving element according to claims 1 to 4, **characterized in that** the outer one of the surface layers on the side of the receiving layer facing the core layer is a layer containing a polypropylene copolymer.

6. Dye-receiving element according to claims 1 to 5, **characterized in that** the core layer exhibiting micropores is a polyolefin layer, especially a polypropylene layer.

7. Dye-receiving element according to claims 1 to 6, **characterized in that** the pore-free surface layer in direct contact with the core layer is a layer containing a polypropylene-homopolymer layer.

8. Dye-receiving element according to claims 1 to 7, **characterized in that** the substrate is a paper exhibiting a wet expansion in cross direction according to Fenchel of < 3%.

9. Dye-receiving element according to claims 1 to 8, **characterized in that** the substrate exhibits a thickness of from 80 to 250 µm.

10. Dye-receiving element according to claims 1 to 9, **characterized in that** a polyolefin layer is arranged on the back side of the carrier with an application weight of up to 50 g/m², in particular of from 20 to 35 g/m².

11. Dye-receiving element according to claims 1 to 10, **characterized in that** an adhesive layer is arranged between the carrier and the composite foil.

12. Dye-receiving element according to claims 1 to 11, **characterized in that** an adhesive layer is arranged between the composite foil and the receiving layer.

13. Dye-receiving element according to claim 1, **characterized in that** the polyolefin-coated paper substrate is a raw paper coated with polyethylene, with a density of ≤ 0.8 g/cm³.

14. Dye-receiving element according to claim 13, **characterized in that** the thickness of the polyolefin layer amounts to ≤ 15 µm.

15. Dye-receiving element according to one of the claims 1 to 14, **characterized in that** the paper contains a mixture of conifer sulfate cellulose and hardwood cellulose, in which case the share of conifer sulfate cellulose in the total cellulose amounts from 5 to 80% by weight, in particular from 10 to 40% by weight.

## Revendications

1. Elément de réception d'encre pour impression par transfert thermique avec un support, une feuille composite coextrudée, biaxialement étirée, avec une couche centrale thermoplastique présentant des micropores, et une couche de réception, **caractérisé en ce que** la feuille composite contient sur la face orientée vers la couche de réception, au moins deux couches de surface thermoplastiques et sans pore et le support est un papier avec une masse spécifique ≤ 0,8 g/cm³.

2. Couche de réception suivant la revendication 1, **caractérisée en ce que** la feuille composite présente en outre, sur la face orientée vers le support de la couche centrale, au moins une couche de surface thermoplastique, sans pore.

3. Elément de réception suivant les revendications 1 et 2, **caractérisé en ce que** l'épaisseur de la feuille composite s'élève à jusqu'à 40 µm.

4. Elément de réception suivant la revendication 3, **caractérisé en ce que** l'épaisseur de la feuille composite se situe dans l'intervalle allant de 25 à 35 µm.

5. Elément de réception suivant les revendications 1 à 4, **caractérisé en ce que** la plus externe des couches de surface sur la face orientée vers la couche de réception de la couche centrale est une couche contenant un copolymère de polypropylène.

6. Elément de réception suivant les revendications 1 à 5, **caractérisé en ce que** la couche centrale présentant des micropores est une couche en polyoléfine, en particulier une couche en polypropylène.

7. Couche de réception suivant les revendications 1 à 6, **caractérisée en ce que** la couche de surface sans pore, en contact direct avec la couche centrale, parmi les au moins deux couches sans pore, est une couche contenant un homopolymère de polypropylène.

8. Couche de réception suivant les revendications 1 à 7, **caractérisée en ce que** le support est un papier présentant une hygroexpansion transversale d'après Fenchel ≤ 3%.

9. Elément de réception suivant les revendications 1 à 8, **caractérisé en ce que** le support présente une épaisseur allant de 80 à 250 µm.

10. Elément de réception suivant les revendications 1 à 9, **caractérisé en ce que** sur la face verso du support, est disposée une couche en polyoléfine avec un poids appliqué de jusqu'à 50 g/m², en particulier allant de 20 à 35 g/m².

11. Elément de réception suivant les revendications 1 à 10, **caractérisé en ce qu'**entre le support et la feuille composite est disposée une couche d'adhésion.

12. Elément de réception suivant les revendications 1 à 11, **caractérisé en ce qu'**entre la feuille composite et la couche de réception, est disposée une couche d'adhésion.

13. Elément de réception suivant la revendication 1, **caractérisé en ce que** le papier support est enduit d'une polyoléfine et que la papier brut a une masse spécifique ≤ 0,8 g/cm³.

14. Elément de réception suivant la revendication 13, **caractérisé en ce que** l'épaisseur de la couche en polyoléfine s'élève à ≤ 15 µm.

15. Elément de réception suivant l'une quelconque des revendications 1 à 14, **caractérisé en ce que** le papier contient un mélange de sulfate de cellulose de bois de résineux et de cellulose de bois de feuillus, où la quantité de sulfate de cellulose de bois de résineux dans la cellulose totale se situe dans l'intervalle allant de 5 à 80% en poids, en particulier de 10 à 40% en poids.
